# EUROPEAN PATENT SPECIFICATION

(11) **EP 1 296 252 B1**
(45) Date of publication and mention of the grant of the patent: **01.08.2007**
(21) Application number: 01203582.0
(22) Date of filing: 21.09.2001
(51) Int. Cl.: G06F 17/30, H04L 29/06, G06F 1/00

(54) **Computer system, data communication network, computer program and data carrier, all for filtering a received message comprising mark-up language content**
Computersystem, Datenübertragungsnetz, Computerprogramm und Datenträger, alle zur Filterung von einen Inhalt gemäss einer Markierungssprache einschliessenden Nachrichten
Système informatique, réseau de communication de données, programme d'ordinateur et support de données, tous pour filtrer un message reçu comprenant un contenu en langage de balisage

(43) Date of publication of application: 26.03.2003
(73) Proprietor: Koninklijke KPN N.V., 9726 AE Groningen (NL)
(72) Inventor: Dijkstra, Willem Pieter, 9725 LK Groningen (NL)
(74) Representative: Wuyts, Koenraad Maria

(56) References cited:
- EP-A- 1 079 315
- WO-A-01/55891
- WO-A2-01/50386
- WO-A2-98/40992
- US-A- 5 987 611
- CHANDRAMOULI R: "APPLICATION OF XML TOOLS FOR ENTERPRISE-WIDE RBAC IMPLEMENTATION TASKS" PROCEEDINGS OF THE 5TH. ACM WORKSHOP ON ROLE-BASED ACCESS CONTROL. BERLIN, GERMANY, JULY 26 - 27, 2000, ACM ROLE-BASED ACCESS CONTROL WORKSHOP, NEW YORK, NY: ACM, US, 26 July 2000 (2000-07-26), pages 11-18, XP000958089 ISBN: 1-58113-259-X
- CHAPMAN D.B.; ZWICKY E.D.: 'Building Internet Firewalls', 1995, O'REILLY AND ASSOCIATES, INC., SEBASTOPOL, CALIFORNIA, USA, ISBN 1-52592-124-0 * pages 161-176 *

## Description

The invention relates to a computer system and computer program as defined in the preamble of claims 1 and 17.

From the International Patent publication WO 00/77668 an Extensible Mark-up Language (XML) proxy server is known. The XML proxy server determines whether a received document is an unprocessed XML document. If the received document is an unprocessed XML document, the server system searches a local cache memory for a processed version of the document and transmits the processed document to a client. If the document is not found in the cache memory the proxy server processes the XML document and transmits the processed document to the client.

WO 01/50386 discloses a system and method for ensuring compliance with regulations. A Global Regulatory Compliance System (GRCS) makes an initial determination whether it can process an incoming order, for instance by determining whether a specified product or customer are known to the GRCS system. Further, the GRCS-system examines received orders to determine if they contain all the requisite field of information.

WO 01/55891 discloses a method of retrieving schemas for interpreting documents in an electronic commerce system. Electronic documents are exchanged between trading partners over a transaction services network and are written in a markup language such as XML. Tags used in the document instances are defined in a schema, i.e. a collection of tags defined in a file. Each schema defines a document type, which corresponds to a type of transaction. A schema is identified by using a Uniform Resource Name (URN) and XML processors parse document instances by retrieving the URN corresponding to schemas used to interpret the document.

However, a problem of the known system is that no security measures are taken. For example, an Extensible Mark-up Language (XML) code may be included in the data which will cause the computer system executing the code to function improperly which might eventually result in crashing of the computer system. This code may be inserted in the data by a hacker. Furthermore, for instance in e-commerce systems, an XML code may be included in the data with the intent to perform fraudulent transactions.

It is an object of the invention to overcome or at least reduce this problem.

This object is achieved by the computer system and computer program as defined in the characterizing portions of claim 1 and 17

Because messages that do not satisfy the semantics rules and/or the syntax rules are discarded, the risk of damages to the network or system in the network is reduced. In general, messages with syntax or semantics errors may cause systems executing commands in the data to function improperly, since these systems will only be able to perform commands in conformity with the syntax and semantics rules. Furthermore, the risk of hacking the system is reduced, especially if the system according to the invention is combined with a firewall and/or proxy server system. It is likely that messages sent with malicious intentions contain code representing commands non-conformal to the rules for semantics and/or syntax.

Also, the invention provides a data communication network as defined in claim 10.

Such a data communication network is more secure, since data may be filtered by a computer system according to the invention.

The invention further provides a data carrier, stored with data loadable in a computer memory said data representing a computer program according to the invention.

It is to be noted that the data communication network might be a wired as well as a wireless network. The method and system according to an embodiment of the invention may e.g. be applied for filtering or controlling synchronisation commands as used in SyncML, a protocol under development for universal synchronization of data between devices in a wireless network.

Particular embodiments of the invention are set forth in the sequel.

Further details, aspects and embodiments of the invention will be described with reference to the figures in the attached drawing.

It is noted that the previous embodiments or aspects of the previous embodiments of the invention can be combined.
Fig. 1 shows an example of an embodiment of a computer system connecting a communication network to communication devices outside the network.
Figs. 2 and 3 show flowcharts of an example of a method according to the invention.
Fig. 4 schematically shows a message in XML.
Fig. 5 schematically shows a syntax database for use in a computer system according to an embodiment of the invention.
Figs. 6 and 7 schematically show a semantic database for use in a computer system according to an embodiment of the invention.
Fig. 8 schematically shows an example of an embodiment of a computer system according to the invention connecting an e-commerce database server system to a web front-end system in an internet network.
Fig. 9 schematically shows two networks connected to each other via computer systems according to the invention.

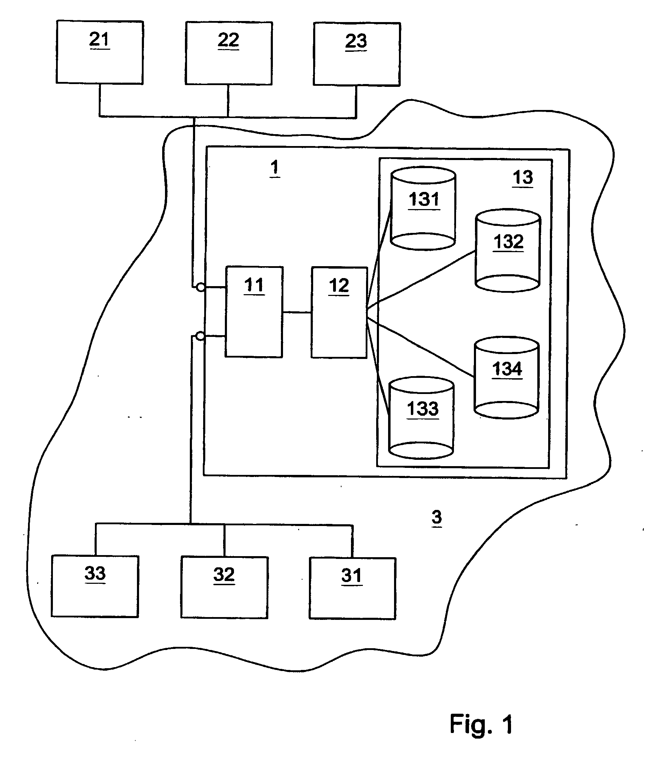

Fig. 1 shows a computer system 1 connecting a communication network 3 including communication devices 31-33 to communication devices 21-23 outside the network 3. The computer system 1 includes a network communication device 11, a processor device 12 and a memory device 13. The network communication device 11 is connected to the communication devices 21-23; 31-33 and may receive and send data from and to the network 3. The processor device 12 is connected between the network communication device 11 and the memory device 13. In this example, the memory device 13 includes a syntax database 131, a semantics database 132, a behaviour database 133 and a content type database 134.

In operation, the computer system 1 receives data transmitted from the communication devices 21-23 to the communication devices 31-33 in the communication network 3. The data is received at the network communication device 11 and processed by the processor device 12. The network communication device may be of any suitable type. The network communication device may for example be a network card or a motherboard provided with an Ethernet adapter placed in a general-purpose computer or a router device, a switch device or any other device.

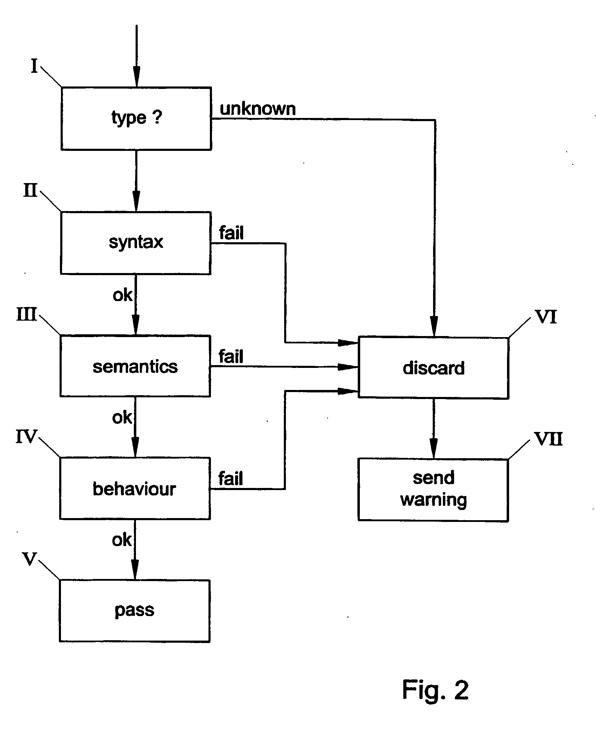

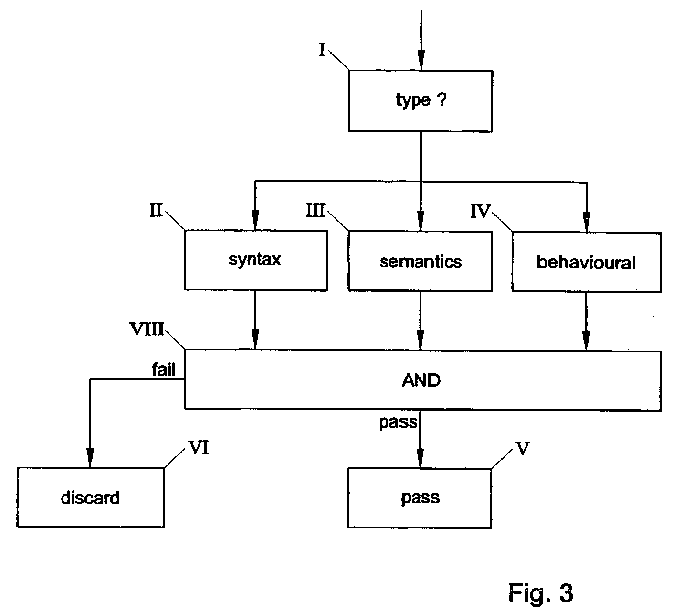

The processor device 12 is arranged for performing a method according to the invention, for example a method as represented by the flow-chart in fig. 2 or a method as represented by the flowchart of fig. 3.

In the method of fig. 2, first a content type of data is determined in step I. If the content type is not recognised by the system, the data is discarded in step VI. In the system of fig. 1 a list of content types is stored in the content type database 134. If the content type of the data is corresponds to the content type in the database 134, in step II the syntax of the data content is determined and checked against a set of predetermined syntax rules corresponding to the content type of the data. The syntax rules in the system of fig. 1 are stored in the syntax database 131. If the syntax is not correct, i.e. the syntax is not in conformity with the syntax rules, the data is discarded in step VI. If the syntax of the data is in conformity with the syntax rules the semantics of the data is determined and checked against a set of predetermined semantics rules in step III. If the semantics do correspond to the semantic rules, the data are processed further. If not the data are discarded in step VI.

A computer system according to the invention is secure, because data that are likely to cause system failures are filtered out. In general, data with syntax or semantics errors are a likely cause of errors, since systems will only perform commands contained in the data which are in conformity with the syntax and semantics rules. Commands with syntactical and/or semantical errors may are either be not recognised or cause unpredictable actions of the systems.

Furthermore, in a computer system according to the invention the risk of hacking the system is reduced. It is likely that data sent with malicious intentions contain code representing commands are not-conformal to the rules for the syntax and/or semantics, since the intention of a hacker is to let the system function improperly or to perform illegal operations. Data that do satisfy the rules will not cause improper functioning. Therefore, filtering the data according to the invention increases the system security.

The processor device may further check the content of the data against a set of behavioural rules corresponding to the content type in step IV. The computer system 1 in fig. 1 includes a behavioural database 133 comprising data representing the behavioural rules. When the data are in line with the rules, the data are processed further. If not, the data are discarded in step VI. The behavioural rules restrict the acceptance of content of the data, for example by describing ranges of values for variables or defining a number of times an action may be repeated by the systems in the network. The checking of the behavioural rules reduces the risk of damages to the network or system in the network further, since it is likely that data not corresponding to a normal behaviour are sent with the intention to harm the system. Furthermore, the risk of fraud is reduced since unusual behaviour is detected, such as excessive orders, for example ordering tens of thousands of a single item type.

If the data is discarded in step VI, a warning message may be sent to the intended receiver of the data in step VII. A warning message may likewise be sent to for example a system operator, a system administrator or a site security officer or another system or person interested in the security of the system. Also, the source of the message or data may be notified via a message that the data is discarded. Thereby, users are notified of possible fraud or hacking of the system and may take additional measures for protection of the network or tracking of the source of the fraud or hacking. Furthermore, the users may be asked to grant access to the data. This allows users to overrule the filtering, for example if the data are sent by a trusted third party and it is not likely that the data cause a system crash.

In the example of a method according to the invention represented by the flow-chart of fig. 3 the steps II-IV of checking against a set of predetermined rules are performed substantially simultaneously. After the steps II-IV the results of the checking operation are compared in step VIII. The data are discarded in step VI if any of the checks fails. The comparing operation in step VIII may for example be an AND operation, resulting in a pass signal if the message satisfies all rules and a fail signal if the message does not satisfy at least one of the sets of rules. If the message has passed all checks, the data are passed through in step V and processed further.

The content type of the data may be determined with any method suitable for the specific implementation. For example, the processor may determine what type of mark-up language is used, such as standard generalised mark-up language (SGML), extensible mark-up language (XML) or Hypertext mark-up language (HTML). As known to those skilled in the art, XML is defined as an application profile of the SGML that is defined by ISO 8879. XML allows to design a specific mark-up language. In this regard, a predefined mark-up language, such as hypertext mark-up language (HTML), defines one manner in which to describe information in one specific class of documents. In contrast, XML allows to define customised mark-up languages for different classes of documents. As such, XML specifies neither semantics nor a tag set. However, XML provides a facility to define tags and the structural relationships between them. Reference is made to the Extensible Mark-up language recommendation published by the World Wide Web consortium which can be found at http://www.w3.org/TR/REC-xml.

In XML, the content type may for example be determined from the first lines of a message. In general, XML messages start with the following two tags in ASCI characters:

```
       <?xml version=" [value]">
       <doctype "[document type]" system="[external file]">
```

Therefore, the content type of data starting with a tag beginning with the string '<?xml' may be determined to be XML. The value of the version field [value] indicates the specific XML version used which may for example be version 1.0. The tag starting with '<?xml' may further include other codes indicating specific properties of the message, such as the character encoding used or included external messages. Thus reading the first line of the message may reveal the content type of the message, such as XML version 1.0.

The tag <doctype "[document type]"> indicates the type of document which gives a more specific indication of the content type. In XML, document types are defined by the user; the XML standard does not describe a set of available document types. As shown in fig. 1, the content types known by the computer system 1 may be stored in a content type database 134 in the memory device 13. The content type database 134 may for example include files for each mark-up language recognised by the computer system. For example, in a XML subdatabase of database 134, the different document types may be listed. These document types for example may include "order", "confirmation", "bill" etc, when the computer system 1 is used to connect computer systems in networks of companies which handle business transactions. Thus reading the second line of the message may reveal a more specific document type. The document type determined from the first two lines of a message in XML may for example be: an order in XML version 1.0, a confirmation in XML version 1.0 etc.

The document type may be determined in a similar manner for documents of other types, for example in a different mark-up language such as HTML. In general, documents in other mark-up languages, such as HTML documents and SGML documents, start with a line specifying the language type of the message. Likewise, messages containing scripting commands, such as JavaScript or Visual Basic contain a corresponding line with a scripting language specification.

The syntax of the data may be determined and checked in any suitable manner. For example, in XML a Document Type Definition (DTD) is used which specifies allowed elements and attributes. A message in XML either includes the DTD or specifies an external file in which the DTD is stored. The DTD thus specifies the predetermined syntax rules and a number of DTDs may be stored in the syntax database 131.

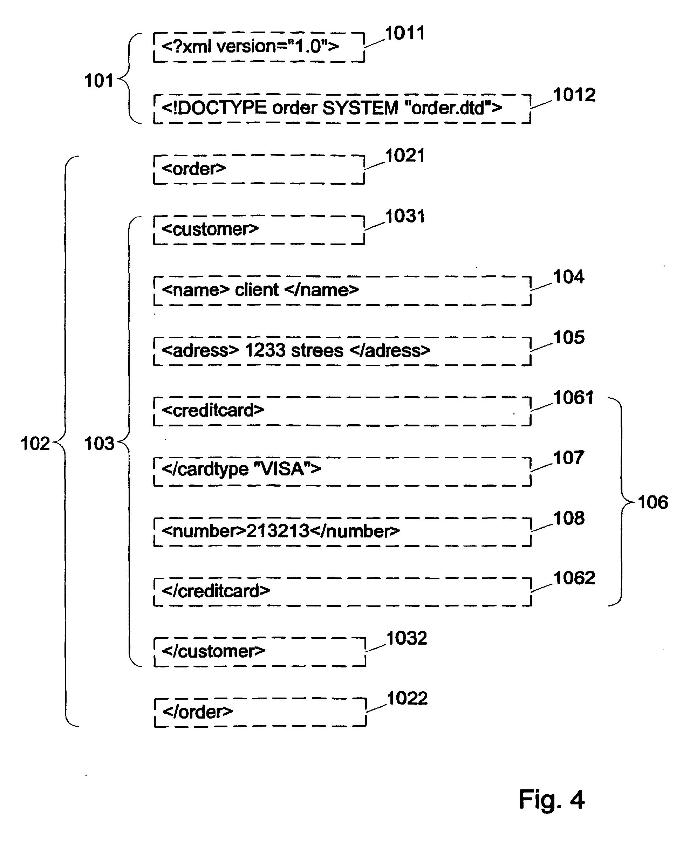

An example of a XML message is shown in fig. 4. The message includes a number of elements 101-106. An element may include subelements and in its turn each sub element may include subsubelements. The beginning of an element 'elementname' is indicated with the tag '<elementname>' and the closing of an element is indicated with the tag '</elementname>'.

The example of fig. 4 includes a type declaration element 101 which specifies the XML version used. The type declaration includes two tags 1011, 1012. The first tag 1011 defines the XML language used. The second tag 1012 defines the type of document, as is explained above. The declaration 101 is followed by an order element 102 which starts with tag 1021 and ends with tag 1022. The order element includes a customer element 103 which contains a name element 104, an address element 105, and a credit card element 106. The credit card element includes a type element 107 and a number element 108.

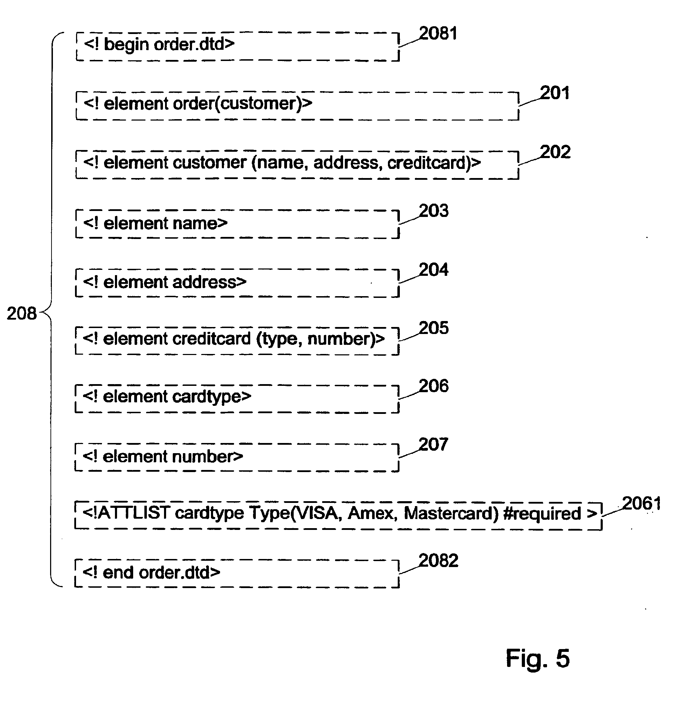

An example of a DTD 208 corresponding to the example shown in fig. 4 is shown in fig. 5. The DTD 208 defines element types 201-207 used in documents of type 'order'. As indicated by tag 201, the element 'order' includes the subelement 'customer'. The element type customer includes the subelements name, address and credit card, as is indicated by tag 202. Tags 203-205 make a declaration of the element types name, address and credit card resp. The element credit card includes the subelement types 'cardtype' and number which are declared by tags 206 and 207 resp. As is indicated with tag 2061 the elementtype cardtype may be of the type VISA, Amex or MasterCard. If the cardtype is used in a message, the type of card has to be includes as is indicated with the string '#required' in tag 2061.

The DTD may be used to check the syntax of the message by comparing the declarations of elementtypes and attributes in the DTD with the elements and attributes thereof used in the message. When the elements and/or attributes do not check with the declarations in the DTD, the message is discarded and/or a warning is sent to an intended recipient of the data, a source of the data or a network administrator of the network the computer system 1 is part of.

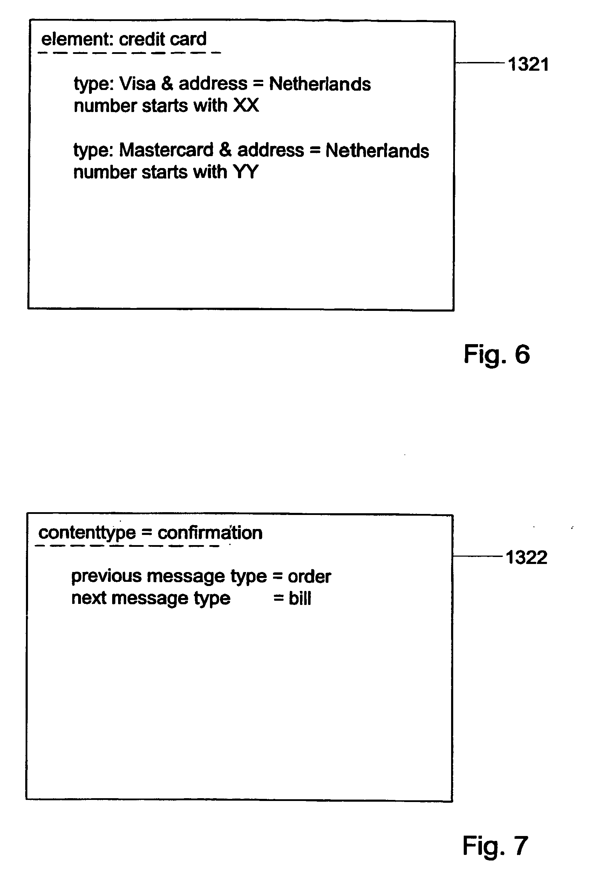

When the document type is XML, the semantics rules in semantic database 132 may at least include definitions of relations between elementtypes defined in the document type definition. For example the semantics rules may specify ranges of values of parameters and variables specified in the syntax rules. The semantics rules may specify relations between parameters and values. Figs. 6 and 7 show examples of fields in the semantics database defining semantics rules. Fig. 6 shows a part of a semantics field 1321 of the elementtype 'credit card' stored in the semantics database 132. If the card type is Visa and the address of the cardholder is in the Netherlands, the card number should start with XX. Likewise if the card type is MasterCard and the address of the cardholder is in the Netherlands the card number should start with YY. Fig. 7 shows an example rule 1322 which defines a part of a flow of data. When the content type is 'confirmation', the previous data type should be 'order' and the next data type should be 'bill'.

The behavioural rules may for example be determined from previous data for a source, like, for example in an e-commerce environment, previous orders for a specific source. The behavioural rules may for example be derived using data mining devices from one or more databases in which information relating to users of the system is stored. When data are received that differs significantly from the previous orders, it may be deemed to be not in line with the behavioural rules. For example, when a person has previously ordered less than ten compact disks per time, a message ordering a couple of hundreds of compact disks is probably fraudulent and may be discarded. Furthermore, odd transactions or parameter values may be defined in the behavioural database, such as a number of repetitions of a certain command or a relatively rare variable number, such as an number of books ordered which is above 100. Also, an average number of transactions per month for a specific user, an average amount of money spent per transaction or types of previously bought items may be used in the behavioural database.

The network communication device may be a single direction device, wherein data may only be received by the device and transmitted into the network 3. The network communication device may also be a (full) duplex device, that is a device able to receive and send data from and to the network when connected thereto.

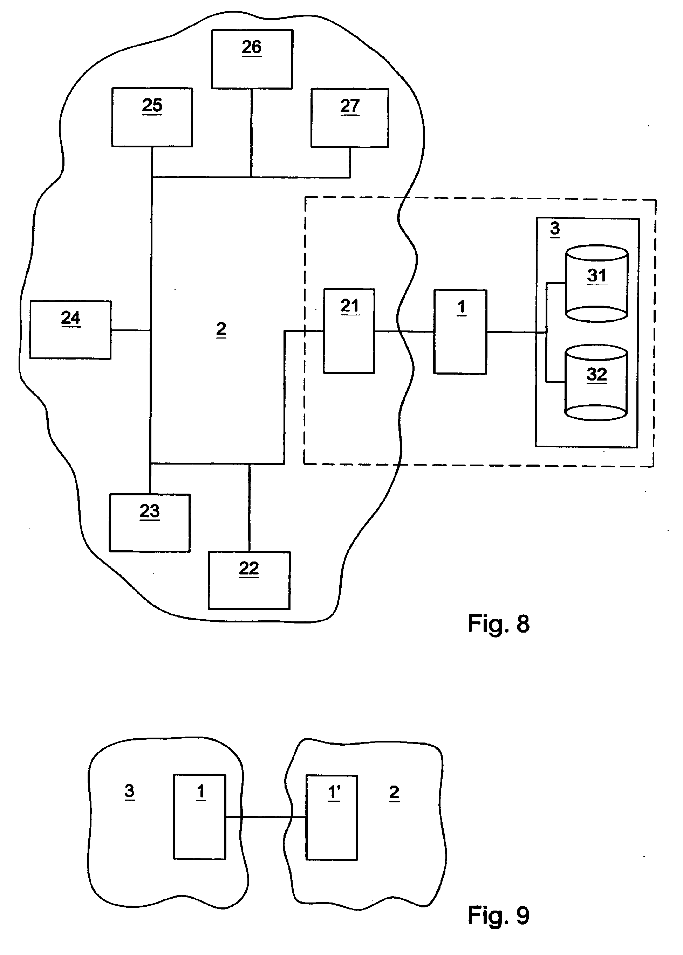

The computer system may be part of a data communication network including at least one first communication system connected to a second communication system. The computer system may likewise be a firewall server system in a data communication network. The data communication network may include at least one server system connected to a client system via the firewall server system. As shown in fig. 8, the server system may be a web server front end system 21 connected to other systems 22-27 via the internet 2, for example the World Wide Web, while the client system is a database server system 3 including databases 31,32 which may handle transactions entered in the web server front end system 21 by the other systems 22-27.

The computer system may also be a router device or a gateway device connecting at least two networks to each other. For example, as shown in fig. 9 the computer system 1 may connect the network 3 of a first company to a network 2 of a second company via a second computer system 1' according to the invention. The computer system 1 may also be a web server system and the second network an internet network.

Furthermore, the invention may be applied to either data received by a network or data being transmitted from the network. For example in business-to-business connections outgoing data may be filtered with a method according to the invention or a system according to the invention, to provide a secure and stable connection.

The invention is not limited to implementation in the disclosed examples of physical devices, but can likewise be applied in another device. In particular, the invention is not limited to physical devices but can also be applied in logical devices of a more abstract kind or in software performing the device functions. Furthermore, the devices may be physically distributed over a number of apparatus, while logically regarded as a single device. Also, devices logically regarded as separate devices may be integrated in a single physical device. For example, in the processor device 12 in fig. 1 memory devices may be implemented or in the memory device 13 some processing means may be integrated.

The invention may also be implemented in a computer program for running on a computer system, at least including code portions for performing steps of a method according to the invention when run on a computer system or enabling a general propose computer system to perform functions of a computer system according to the invention. Such a computer program may be provided on a data carrier, such as a CD-rom or diskette stored with data loadable in a memory of a computer system, the data representing the computer program. The data carrier may further be a data connection, such as a telephone cable or a wireless connection transmitting signals representing a computer program according to the invention.

## Claims

1. A computer system for filtering a received message comprising mark-up language content including:
- at least one network communication device (11) connectable to a data communication network (3) and able to receive data from said data communication network when connected thereto;
- at least one processor device (12) communicatively connected to said network communication device
**characterized in that**
said processor device (12) is further at least arranged to:
- determine a content type of said received message and if said content type is one of a number of predetermined content types:
- determine a content syntax of said mark-up language content and check said content syntax against a predetermined set of syntax rules corresponding to said predetermined content type;
- determine a content semantics of said mark-up language content and check said content semantics against a predetermined set of semantic rules corresponding to said predetermined content type and
- process said message further if said determined content syntax and content semantics satisfy said predetermined syntax rules and semantic rules, and
- discard said message if at least one of said determined content syntax and content semantics do not satisfy said predetermined syntax rules and semantic rules.

2. A computer system (1) as claimed in claim 1, wherein said computer system further comprises
at least one memory device communicatively connected to said processor device (12) and provided with data representing:
- at least one syntax database (131) at least including data representing a predetermined set of syntax rules;
- at least one semantic database (132) at least including data representing a predetermined set of semantic rules.

3. A computer system (1) as claimed in claim 1 or 2, wherein said at least one processor device (12) is further arranged to send a warning message to a system when said message is discarded.

4. A computer system (1) as claimed in claims 1-3, wherein said processor device (12) is further arranged to check the content of said received message with a predetermined set of behavioural rules corresponding to said content type and wherein a memory device (13) further includes at least one behavioural database (133) at least including data representing said predetermined set of behavioural rules

5. A computer system (1) as claimed in any one of the claims 1-4, wherein said predetermined content types at least include an extensible mark-up language, and said syntax database (131) is a document type definition database.

6. A computer system (1) as claimed in claim 5, wherein said semantic database (132) at least includes definitions of relations between element types (201-207) defined in said document type definition.

7. A computer system (1) as claimed in claim 6, wherein said semantics rules includes state transitions rule defining a flow of successive element types.

8. A computer system (1) as claimed in any one of the claims 4-7, wherein said predetermined set of behavioural rules is determined from previous data for at least one source of said network.

9. A computer system (1) as claimed in any one of the preceding claims, wherein said network communication device (11) is further arranged to send data to said at least one network (3) when connected thereto.

10. A data communication network (3) including at least one first communication device and at least one second communication device, connected to each other, wherein at least one of said communication devices is the computer system according to claim 1.

11. A data communication network (2) as claimed in claim 10, wherein at least one of said communication devices is said computer system (1) as claimed in any one of the claims 2-9.

12. A data communication network (2) as claimed in claim 10 or 11, including at least one server system connected to a client system via at least one firewall server system, wherein at least one of said firewall server systems is a computer system (1) as claimed in any one of claims 1-9.

13. A data communication network (2) as claimed in claim 12, wherein said server system is connectable to at least one second network.

14. A data communication network (2) as claimed in claim 13, wherein said server system is a web server system, and said second network is an internet network.

15. A data communication network (2) as claimed in claim 13, wherein said second network is a wireless network.

16. A data communication network (2) as claimed in any one of claims 10-15, wherein said at least one first communication device and said at least one second communication device are arranged to send and receive extensible mark-up language data from and to each other.

17. A computer program for running on a computer system (1), at least including software code portions for performing filtering a received message comprising mark-up language content in a network when loaded in the computer system **characterized in that** said software code portions perform the steps of:
determine a content type of said received message and if said content type is one of a number of predetermined content types:
- determine a content syntax of said mark-up language and check said content syntax against a predetermined set of syntax rules corresponding to said predetermined content type ;
- determine a content semantics of said mark-up language and check said content semantics against a predetermined set of semantic rules corresponding to said predetermined content type and
- process said message further if said determined content syntax and content semantics satisfy said predetermined syntax rules and semantic rules, and
- discard said message if at least one of said determined content syntax and content semantics do not satisfy said predetermined syntax rules and semantic rules.

18. A computer program as claimed in claim 17, further including software code portions for determining a content of said received message and checking said content against a set of predetermined behavioural rules corresponding to said content type

19. A data carrier, stored with data loadable in a computer memory for executing the computer program of claims 17 or 18 when run on a computer system.

## Patentansprüche

1. Computersystem zur Filterung einer empfangenen Nachricht, die Inhalt in Auszeichnungssprache umfasst, beinhaltet:
- mindestens eine Netzwerk-Kommunikations-Vorrichtung (11), die mit einem Daten-Kommunikations-Netzwerk (3) verbindbar ist, und die geeignet ist, Daten von besagtem Daten-Kommunikations-Netzwerk zu empfangen, wenn diese dazu verbunden ist;
- mindestens eine Prozessor-Vorrichtung (12), die zu besagter Netzwerk-Kommunikations-Vorrichtung kommunikativ verbunden ist,
**dadurch gekennzeichnet, dass** besagte Prozessor-Vorrichtung (12) weiterhin mindestens angeordnet ist zur:
- Bestimmung einer Inhaltsart von besagter empfangener Nachricht und falls besagte Inhaltsart eine von einer Anzahl von vorbestimmten Inhaltsarten ist:
- Bestimmung einer Inhalts-Syntax von besagtem Inhalt in Auszeichnungssprache und Prüfung der besagten Inhalts-Syntax gegen einen vorbestimmten Satz von Syntax-Regeln, die besagter vorbestimmter Inhaltsart entsprechen;
- Bestimmung einer Inhalts-Semantik von besagtem Inhalt in Auszeichnungssprache und Prüfung der besagten Inhalts-Semantik gegen einen vorbestimmten Satz von Semantik-Regeln, die besagter vorbestimmter Inhaltsart entsprechen; und
- weiteres Verarbeiten von besagter Nachricht, falls besagte vorbestimmte Inhalts-Syntax und Inhalts-Semantik besagte vorbestimmte Syntax-Regeln und Semantik-Regeln erfüllen, und
- Verwerfen von besagter Nachricht, wenn mindestens eine von besagter bestimmter Inhalts-Syntax und Inhalts-Semantik besagte vorbestimmte Syntax-Regeln und Semantik-Regeln nicht erfüllen.

2. Computersystem (1) wie in Anspruch 1 beansprucht, wobei das Computersystem weiterhin umfasst
mindestens eine Speichervorrichtung, die kommunikativ mit besagter Prozessor-Vorrichtung (12) verbunden ist und mit Daten versorgt wird, die darstellen:
- mindestens eine Syntax-Datenbank (131), die mindestens Daten beinhaltet, welche vorbestimmte Sätze von Syntax-Regeln darstellen;
- mindestens eine Semantik-Datenbank (132), die mindestens Daten beinhaltet, welche einen vorbestimmten Satz von Semantik-Regeln darstellen.

3. Computersystem (1) wie in Anspruch 1 oder 2 beansprucht, wobei besagte mindestens eine Prozessor-Vorrichtung (12) weiterhin angeordnet ist, um eine Warnnachricht zu einem System zu senden, wenn besagte Nachricht verworfen wird.

4. Computersystem (1) wie in den Ansprüchen 1-3 beansprucht, wobei besagte Prozessor-Vorrichtung (12) weiterhin angeordnet ist, um den Inhalt von besagten empfangenen Nachrichten mit einem vorbestimmten Satz von Verhaltens-Regeln, die besagter Inhaltsart entsprechen, zu prüfen und wobei eine Speichervorrichtung (13) weiterhin mindestens eine Verhaltens-Datenbank (133) beinhaltet, die mindestens Daten beinhaltet, die besagten vorbestimmten Satz von Verhaltens-Regeln darstellen.

5. Computersystem (1) wie in einem der Ansprüche 1-4 beansprucht, wobei besagte vorbestimmte Inhaltsarten mindestens eine erweiterbare Auszeichnungssprache beinhalten und wobei besagte Syntax-Datenbank (131) eine Dokumentenart-Definitions-Datenbank ist.

6. Computersystem (1) wie in Anspruch 5 beansprucht, wobei besagte Semantik-Datenbank (132) mindestens Definitionen von Beziehungen zwischen Element-Arten (201-207), die in besagter Dokumentart-Definition definiert sind, beinhaltet.

7. Computersystem (1) wie in Anspruch 6 beansprucht, wobei besagte Semantik-Regeln Zustands-Übermittlungs-Regeln beinhalten, die einen Fluss von nachfolgenden Element-Arten definieren.

8. Computersystem (1) wie in einem der Ansprüche 4-7 beansprucht, wobei besagter vorbestimmter Satz von Verhaltensregeln von vorhergehenden Daten von mindestens einer Quelle von besagtem Netzwerk bestimmt werden.

9. Computersystem (1) wie in einem der vorhergehenden Ansprüche beansprucht, wobei besagte Netzwerk-Kommunikations-Vorrichtung (11) weiterhin angeordnet ist, um Daten zu besagtem mindestens einem Netzwerk (3), wenn mit diesem verbunden, zu senden.

10. Datenkommunikations-Netzwerk (3) das mindestens eine erste Kommunikationsvorrichtung und mindestens eine zweite Kommunikationsvorrichtung beinhaltet, die miteinander verbunden sind, wobei mindestens eine der besagten Kommunikationsvorrichtungen das Computersystem nach Anspruch 1 ist.

11. Datenkommunikations-Netzwerk (2) wie in Anspruch 10 beansprucht, wobei mindestens eine der besagten KommunikationsVorrichtungen besagtes Computersystem (1) ist, wie in einem der Ansprüche 2-9 beansprucht.

12. Daten-Kommunikationsnetzwerk (2) wie in Anspruch 10 oder 11 beansprucht, das mindestens ein Server-System beinhaltet, das mit einem Klienten-System über mindestens ein Firewall-Serversystem verbunden ist, wobei mindestens eines von besagten Firewall-Serversystemen ein Computersystem (1) ist, wie in einem der Ansprüche 1-9 beansprucht.

13. Datenkommunikations-Netzwerk (2) wie in Anspruch 12 beansprucht, wobei besagtes Server-System mit mindestens einem zweiten Netzwerk verbindbar ist.

14. Datenkommunikations-Netzwerk (2) wie in Anspruch 13 beansprucht, wobei besagtes Server-System ein Webserver-System ist, und besagtes zweites Netzwerk ein Internet-Netzwerk ist.

15. Datenkommunikations-Netzwerk (2) wie in Anspruch 14 beansprucht, wobei besagtes zweites Netzwerk ein drahtloses Netzwerk ist.

16. Datenkommunikations-Netzwerk (2) wie in einem der Ansprüche 10-15 beansprucht, wobei besagte mindestens eine Kommunikations-Vorrichtung und besagte mindestens eine zweite Kommunikationsvorrichtung zum Senden und Empfangen von erweiterbarer Auszeichnungssprache von und zu einander angeordnet sind.

17. Computerprogramm zur Ausführung auf einem Computersystem (1), das mindestens Software-Code-Abschnitte zur Ausführung einer Filterung einer empfangenen Nachricht, welche Inhalt in Auszeichnungs-Sprache beinhaltet, in einem Netzwerk beinhaltet, wenn sie in ein Computersystem geladen wird, **dadurch gekennzeichnet, dass** besagte Software-Code-Abschnitte die Schritte ausführen von einer
Bestimmung einer Inhaltsart von besagter empfangener Nachricht und falls besagte Inhaltsart eine von einer Anzahl von vorbestimmten Inhaltsarten ist:
- Bestimmung einer Inhalts-Syntax von besagtem Inhalt in Auszeichnungssprache und Prüfung der besagten Inhalts-Syntax gegen einen vorbestimmten Satz von Syntax-Regeln, die besagter vorbestimmter Inhaltsart entsprechen;
- Bestimmung einer Inhalts-Semantik von besagtem Inhalt in Auszeichnungssprache und Prüfung der besagten Inhalts-Semantik gegen einen vorbestimmten Satz von Semantik-Regeln, die besagter vorbestimmter Inhaltsart entsprechen; und
- weiteres Verarbeiten von besagter Nachricht, falls besagte vorbestimmte Inhalts-Syntax und Inhalts-Semantik besagte vorbestimmte Syntax-Regeln und Semantik-Regeln erfüllen, und
- Verwerfen von besagter Nachricht, wenn mindestens eine von besagter bestimmter Inhalts-Syntax und Inhalts-Semantik besagte vorbestimmte Syntax-Regeln und Semantik-Regeln nicht erfüllen.

18. Computer-Programm wie in Anspruch 17 beansprucht, das weiterhin Software-Code-Abschnitte zur Bestimmung eines Inhaltes von besagten empfangenen Nachrichten und zur Prüfung des besagten Inhaltes gegen einen Satz von vorbestimmten Verhaltens-Regeln, die besagter Inhaltsart entsprechen, beinhaltet.

19. Datenträger, der mit in einen Computerspeicher ladbaren Daten zur Ausführung des Computerprogramms gemäss den Ansprüchen 17 oder 18 versehen ist, wenn diese auf einem Computersystem ausgeführt werden.

## Revendications

1. Système d'ordinateur pour filtrer un message reçu comprenant un contenu de langage évolué incluant :
au moins un dispositif de communication de réseau (11) qui peut être connecté à un réseau de communication de données (3) et qui peut recevoir des données en provenance dudit réseau de communication de données lorsqu'il lui est connecté ;
au moins un dispositif de processeur (12) connecté en communication audit dispositif de communication de réseau,
**caractérisé en ce que** :
ledit dispositif de processeur (12) est en outre au moins agencé pour :
déterminer un type de contenu dudit message reçu et si ledit type de contenu est l'un d'un certain nombre de types de contenu prédéterminés :
déterminer une syntaxe de contenu dudit contenu de langage évolué et vérifier ladite syntaxe de contenu vis-à-vis d'un jeu prédéterminé de règles de syntaxe correspondant audit type de contenu prédéterminé ;
déterminer une sémantique de contenu dudit contenu de langage évolué et vérifier ladite sémantique de contenu vis-à-vis d'un jeu prédéterminé de règles sémantiques correspondant audit type de contenu prédéterminé ; et
traiter ledit message davantage si ladite syntaxe de contenu déterminée et ladite sémantique de contenu déterminée satisfont lesdites règles de syntaxe prédéterminées et lesdites règles sémantiques prédéterminées ; et
mettre à l'écart ledit message si au moins un élément pris parmi ladite syntaxe de contenu déterminée et ladite sémantique de contenu déterminée ne satisfait pas lesdites règles de syntaxe prédéterminées et lesdites règles sémantiques prédéterminées.

2. Système d'ordinateur (1) selon la revendication 1, dans lequel ledit système d'ordinateur comprend en outre :
au moins un dispositif de mémoire connecté en communication audit dispositif de processeur (12) et muni de données représentant :
au moins une base de données de syntaxes (131) incluant au moins des données représentant un jeu prédéterminé de règles de syntaxe ; et
au moins une base de données de sémantiques (132) incluant au moins des données représentant un jeu prédéterminé de règles sémantiques.

3. Système d'ordinateur (1) selon la revendication 1 ou 2, dans lequel ledit au moins un dispositif de processeur (12) est en outre agencé pour envoyer un message d'avertissement à un système lorsque ledit message est mis à l'écart.

4. Système d'ordinateur (1) selon les revendications 1 à 3, dans lequel ledit dispositif de processeur (12) est en outre agencé pour vérifier le contenu dudit message reçu à l'aide d'un jeu prédéterminé de règles comportementales correspondant audit type de contenu et dans lequel un dispositif de mémoire (13) inclut en outre au moins une base de données comportementales (133) incluant au moins des données représentant ledit jeu prédéterminé de règles comportementales.

5. Système d'ordinateur (1) selon l'une quelconque des revendications 1 à 4, dans lequel lesdits types de contenus prédéterminés incluent au moins un langage évolué extensible et ladite base de données de syntaxes (131) est une base de données de définitions de types de documents.

6. Système d'ordinateur (1) selon la revendication 5, dans lequel ladite base de données sémantiques (132) inclut au moins des définitions de relations entre des types d'éléments (201-207) définis selon ladite définition de type de document.

7. Système d'ordinateur (1) selon la revendication 6, dans lequel lesdites règles sémantiques incluent une règle de transition d'état qui définit un flux de types d'éléments successifs.

8. Système d'ordinateur (1) selon l'une quelconque des revendications 4 à 7, dans lequel ledit jeu prédéterminé de règles comportementales est déterminé à partir de données précédentes pour au moins une source dudit réseau.

9. Système d'ordinateur (1) selon l'une quelconque des revendications précédentes, dans lequel ledit dispositif de communication de réseau (11) est en outre agencé pour envoyer des données audit au moins un réseau (3) lorsqu'il lui est connecté.

10. Réseau de communication de données (3) incluant au moins un premier dispositif de communication et au moins un second dispositif de communication, qui sont connectés l'un à l'autre, dans lequel au moins l'un desdits dispositifs de communication est le système d'ordinateur selon la revendication 1.

11. Réseau de communication de données (2) selon la revendication 10, dans lequel au moins l'un desdits dispositifs de communication est ledit système d'ordinateur (1) tel que revendiqué selon l'une quelconque des revendications 2 à 9.

12. Réseau de communication de données (2) selon la revendication 10 ou 11, incluant au moins un système de serveur connecté à un système de client via au moins un système de serveur de coupe-feu, dans lequel au moins l'un desdits systèmes de serveur de coupe-feu est un système d'ordinateur (1) tel que revendiqué selon l'une quelconque des revendications 1 à 9.

13. Réseau de communication de données (2) selon la revendication 12, dans lequel ledit système de serveur peut être connecté à au moins un second réseau.

14. Réseau de communication de données (2) selon la revendication 13, dans lequel ledit système de serveur est un système de serveur web et ledit second réseau est un réseau Internet.

15. Réseau de communication de données (2) selon la revendication 13, dans lequel ledit second réseau est un réseau sans fil.

16. Réseau de communication de données (2) selon l'une quelconque des revendications 10 à 15, dans lequel ledit au moins un premier dispositif de communication et ledit au moins un second dispositif de communication sont agencés pour envoyer et recevoir des données de langage évolué extensible de l'un à l'autre.

17. Programme d'ordinateur pour un déroulement sur un système d'ordinateur (1), incluant au moins des parties de code de logiciel pour réaliser un filtrage d'un message reçu comprenant un contenu de langage évolué dans un réseau lorsqu'il est chargé dans le système d'ordinateur, **caractérisé en ce que** lesdites parties de code de logiciel réalisent les étapes de :
détermination d'un type de contenu dudit message reçu et si ledit type de contenu est l'un d'un certain nombre de types de contenus prédéterminés :
détermination d'une syntaxe de contenu dudit langage évolué et vérification de ladite syntaxe de contenu vis-à-vis d'un jeu prédéterminé de règles de syntaxe correspondant audit type de contenu prédéterminé ;
détermination d'une sémantique de contenu dudit langage évolué et vérification de ladite sémantique de contenu vis-à-vis d'un jeu prédéterminé de règles sémantiques correspondant audit type de contenu prédéterminé ; et
traitement dudit message davantage si ladite syntaxe de contenu déterminée et ladite sémantique de contenu déterminée satisfont lesdites règles de syntaxe prédéterminées et lesdites règles sémantiques prédéterminées ; et
mise à l'écart dudit message si au moins un élément pris parmi ladite syntaxe de contenu déterminée et ladite sémantique de contenu déterminée ne satisfait pas lesdites règles de syntaxe prédéterminées et lesdites règles sémantiques prédéterminées.

18. Programme d'ordinateur selon la revendication 17, incluant en outre des parties de code de logiciel pour déterminer un contenu du message reçu et pour vérifier ledit contenu vis-à-vis d'un jeu de règles comportementales prédéterminées correspondant audit type de contenu.

19. Support de données, sur lequel sont stockées des données chargeables dans une mémoire d'ordinateur pour exécuter le programme d'ordinateur selon la revendication 17 ou 18 lors d'un déroulement sur un système d'ordinateur.
